# FASCICULE DE BREVET EUROPEEN

(11) **EP 3 868 327 B1**
(45) Date de publication et mention de la délivrance du brevet: **19.04.2023**
(21) Numéro de dépôt: 20159160.9
(22) Date de dépôt: 24.02.2020
(51) Int. Cl.: A61C 1/08, A61C 3/02, A61B 17/17

(54) **ENSEMBLE POUR LA CHIRURGIE DENTAIRE GUIDÉE**
ANORDNUNG FÜR DIE GEFÜHRTE DENTALCHIRURGIE
ASSEMBLY FOR GUIDED DENTAL SURGERY

(43) Date de publication de la demande: 25.08.2021
(73) Titulaire: ANTHOGYR, 74700 Sallanches (FR)
(72) Inventeur: RICHARD, Hervé, 73590 NOTRE DAME DE BELLECOMBE (FR); BLUM, Benoît, 74700 SALLANCHES (FR); LISCI, Stefano, 74700 SALLANCHES (FR)
(74) Mandataire: Cabinet Poncet

(56) Documents cités:
- WO-A1-03/071972
- KR-A- 20110 121 669
- US-A1- 2011 306 009

## Description

### DOMAINE TECHNIQUE DE L'INVENTION

La présente invention concerne le domaine de la chirurgie dentaire, et concerne plus particulièrement le domaine de la chirurgie dentaire guidée.

Pour effectuer un trou dans l'os maxillaire ou mandibulaire d'un patient pour l'insertion d'un implant dentaire, on a parfois recours à la chirurgie dentaire guidée à l'aide d'un guide chirurgical de perçage qui vient reposer sur la gencive et/ou sur les dents voisines du patient et/ou sur l'os.

En pratique, comme illustré dans le document US 2015/0182298 A1, le guide chirurgical de perçage comprend au moins un canon tubulaire de perçage positionné et orienté de façon prédéterminée pour que le trou foré dans l'os maxillaire ou mandibulaire d'un patient ait une orientation optimale eu égard à la qualité de l'os (sa densité notamment), à la position des dents ou implants voisin(e)s et à la place disponible en bouche.

Le canon tubulaire de perçage a un diamètre intérieur prédéterminé dans lequel le chirurgien vient insérer un foret s'allongeant selon une direction longitudinale entre une extrémité proximale et une extrémité distale libre, avec un tronçon proximal de connexion à une pièce à main dentaire et un tronçon distal de coupe.

Pour son guidage, le foret de perçage comporte, entre ses tronçons proximal et distal, un tronçon intermédiaire de guidage cylindrique apte à s'engager à faible jeu selon son diamètre extérieur dans le canon tubulaire de perçage.

L'engagement à faible jeu du tronçon intermédiaire de guidage du foret de perçage dans le canon tubulaire de perçage permet de maintenir une bonne coaxialité entre le foret de perçage et le canon tubulaire de perçage.

Lors de la réalisation du trou dans l'os maxillaire ou mandibulaire du patient, le chirurgien fore l'os de façon progressive, c'est-à-dire en utilisant successivement des forets de tailles croissantes en ce qui concerne le diamètre du tronçon distal de coupe du foret de perçage. Il est en effet primordial de ne pas endommager l'os (par exemple par un effort de coupe trop important produisant un échauffement excessif pouvant conduire à une nécrose) pour ne pas compromettre l'ostéo-intégration de l'implant dentaire qui sera reçu dans le trou.

Le choix du foret à tronçon distal de coupe de plus gros diamètre dépend du diamètre de l'implant à insérer et de la qualité de l'os. Dans un os dur, on privilégiera la réalisation d'un trou de diamètre peu inférieur au plus grand diamètre de l'implant. Dans un os tendre, on privilégiera un diamètre final de trou plus faible (procédé dit de « sub-drilling »).

Lors de la réalisation du trou dans l'os maxillaire ou mandibulaire du patient, le chirurgien doit aussi choisir la longueur du tronçon distal de coupe des forets à utiliser, laquelle longueur dépend de la matière osseuse disponible et de la situation par rapport aux obstacles anatomiques que constituent par exemple des nerfs ou des cavités des sinus.

Ainsi, pour le forage d'un trou, le chirurgien doit employer une pluralité de forets ayant tous un tronçon intermédiaire de guidage cylindrique de même diamètre extérieur pour s'engager à faible jeu dans le canon tubulaire de perçage.

Le document WO 03/071972 A1 préconise de recourir à un guide chirurgical de perçage muni de canons de perçage présentant tous un même et unique diamètre intérieur.

Toutefois, lorsqu'il faut poser au moins deux implants ayant des plus grands diamètres extérieurs différents l'un de l'autre, on a recours à un guide chirurgical de perçage comprenant un premier canon tubulaire de perçage ayant un premier diamètre intérieur et un deuxième canon tubulaire de perçage ayant un deuxième diamètre intérieur, le deuxième diamètre intérieur étant supérieur au premier diamètre intérieur.

Il faut alors deux jeux complets de forets (avec toutes les variations nécessaires et étagées en diamètre et longueur), à savoir :
- un premier jeu complet dont les forets ont tous un tronçon intermédiaire de guidage cylindrique apte à s'engager à faible jeu selon son diamètre extérieur dans le premier canon tubulaire de perçage, et
- un deuxième jeu complet dont les forets ont tous un tronçon intermédiaire de guidage cylindrique apte à s'engager à faible jeu selon son diamètre extérieur dans le deuxième canon tubulaire de perçage.

Tout cela multiplie évidemment le nombre de forets à utiliser, augmente les coûts de traitement, et accroît le risque d'erreur par le chirurgien.

Pour éviter d'avoir recours à deux jeux complets de forets, le document
US 2011/0306009 A1 utilise un outil de guidage comprenant un manche pourvu à chacune de ses extrémités d'un tube de guidage destiné à coopérer extérieurement avec un canon tubulaire de perçage et à coopérer intérieurement avec un foret. L'utilisation d'un tel outil de guidage oblige le chirurgien à faire usage de ses deux mains (une pour tenir l'outil de guidage, l'autre pour tenir la pièce à main dentaire munie du foret), ce que les praticiens n'apprécient pas du tout.

### EXPOSE DE L'INVENTION

Un problème proposé par la présente invention est de limiter efficacement le nombre de forets dans le cadre d'une chirurgie dentaire guidée lorsque sont implantés deux implants ayant des plus grands diamètres extérieurs différents.

Pour atteindre ces objets ainsi que d'autres, l'invention propose un ensemble selon la revendication 1.

Grâce à la douille d'adaptation, on peut utiliser le même foret de perçage tant dans le premier canon tubulaire de perçage que dans le deuxième canon tubulaire de perçage.

De façon plus générale, tous les forets de perçage utilisables dans le premier canon tubulaire de perçage (constituant un premier jeu de forets) peuvent être réutilisés dans le deuxième canon tubulaire de perçage. Ainsi, le jeu de forets de perçage utilisables dans le deuxième canon tubulaire de perçage (constituant un deuxième jeu de forets) n'a pas besoin de comporter des forets présentant des diamètres et longueurs de tronçon distal de coupe identiques à ceux déjà contenus dans le premier jeu de forets.

Cela réduit considérablement le nombre total de forets, donc les coûts, ainsi que le risque d'une erreur de la part du chirurgien.

Avantageusement, des moyens de retenue axiale peuvent être prévus pour permettre d'immobiliser la douille d'adaptation sur le foret en une position prédéterminée selon la direction longitudinale.

De tels moyens de retenue axiale permettent de favoriser l'engagement de la douille d'adaptation dans le deuxième canon tubulaire de perçage. En effet, une douille d'adaptation qui coulisse librement sur le foret de perçage, ou même avec un certain frottement sur le foret de perçage, est insuffisante car le moindre défaut de coaxialité entre la douille d'adaptation et le deuxième canon tubulaire de perçage mène à une remontée de la douille d'adaptation le long du foret de perçage au lieu de pénétrer suffisamment dans le deuxième canon tubulaire de perçage, tandis que l'extrémité distale de coupe va entrer au contact de l'os (donc insuffisamment positionnée par rapport au deuxième canon tubulaire de perçage). Lorsque la douille d'adaptation est fixée axialement en une position prédéterminée sur le foret, le chirurgien n'a besoin d'utiliser qu'une seule de ses mains (pour tenir la pièce à main dentaire pourvue du foret), et l'autre main peut rester libre pour lui permettre toute préhension et/ou mouvement utile.

Avantageusement, les moyens de retenue axiale peuvent comporter :
- un logement creux ménagé dans la paroi latérale du tronçon intermédiaire de guidage du foret,
- une patte de verrouillage, solidaire de la douille d'adaptation, déplaçable élastiquement entre une position de retenue, dans laquelle la patte de verrouillage est engagée au moins en partie dans le logement creux, et une position de libération dans laquelle la patte de verrouillage est hors du logement creux de façon à permettre un coulissement longitudinal de la douille d'adaptation sur le tronçon intermédiaire de guidage du foret.

On réalise ainsi des moyens de retenue axiale qui sont simples et efficaces.

Avantageusement, le logement creux peut être une gorge annulaire périphérique. Une telle gorge permet la venue en position de retenue de la patte de verrouillage quelle que soit l'orientation relative en rotation du foret de perçage et de la douille d'adaptation.

De préférence, la patte de verrouillage peut être disposée dans une lumière ménagée dans la paroi latérale de la douille d'adaptation. La douille de verrouillage présente ainsi une conception compacte.

Avantageusement, on peut prévoir que :
- en position de verrouillage, la patte de verrouillage ne dépasse pas au-delà d'une enveloppe extérieure cylindrique définie par le diamètre extérieur du tronçon d'engagement de la douille d'adaptation,
- en position de verrouillage, la patte de verrouillage dépasse à l'intérieur d'une enveloppe intérieure cylindrique de diamètre sensiblement égal au diamètre extérieur du tronçon intermédiaire de guidage.

La patte de verrouillage peut de préférence comporter une face extérieure qui, en position de retenue, se trouve sensiblement dans le prolongement de la surface cylindrique extérieure à section circulaire du tronçon d'engagement de la douille d'adaptation.

Ainsi, lorsque la douille d'adaptation est engagée dans le deuxième canon tubulaire de perçage, la patte de verrouillage ne peut pas se déplacer vers sa position de libération, de sorte que le maintien de la position axiale de la douille d'adaptation sur le foret de perçage est assuré.

De préférence, le tronçon intermédiaire de guidage peut être prolongé, en direction de l'extrémité proximale du foret, par un tronçon de butée à section transversale dont la plus grande dimension radiale est supérieure au diamètre extérieur du tronçon intermédiaire de guidage, ledit tronçon de butée ayant de préférence une section transversale non circulaire.

Le tronçon de butée est destiné à venir porter en appui contre la face d'ouverture supérieure du premier canon tubulaire de perçage pour stopper l'enfoncement du foret à travers le premier canon tubulaire de perçage. Cela permet une maîtrise fiable de la profondeur du trou.

Avantageusement, on peut prévoir des moyens d'indexation en rotation qui permettent d'immobiliser la douille d'adaptation sur le foret autour de la direction longitudinale. De tels moyens d'indexation, en évitant tout mouvement de rotation relatif entre la douille d'adaptation et le foret de perçage, permettent de limiter une usure prématurée des moyens de retenue axiale.

De préférence, les moyens d'indexation en rotation peuvent comporter :
- un tronçon mâle à section transversale non circulaire sur l'un du foret de perçage et de la douille d'adaptation,
- un tronçon femelle à section transversale sensiblement complémentaire sur l'autre du foret de perçage et de la douille d'adaptation,
- le tronçon mâle est apte à être reçu dans le tronçon femelle par simple coulissement de la douille d'adaptation sur le tronçon intermédiaire de guidage du foret.

Les moyens d'indexation sont ainsi fiables et simples d'utilisation.

Avantageusement, la douille d'adaptation peut comporter un épanouissement radial présentant, selon au moins une direction radiale, un rayon supérieur au rayon du deuxième diamètre intérieur.

Cet épanouissement radial constitue une butée destinée à venir en appui sur le deuxième canon tubulaire de perçage afin de limiter de façon fiable la pénétration en profondeur du foret de perçage dans l'os maxillaire ou mandibulaire. Le fait d'intégrer la butée directement à la douille d'adaptation est appréciable pour le chirurgien, car ce dernier n'a pas à faire usage de moyens de butée extérieurs (par exemple portés par la pièce à main dentaire) qu'il doit penser à régler spécifiquement.

De préférence, l'épanouissement radial peut être annulaire périphérique, de façon à venir en appui uniformément sur le deuxième canon tubulaire de perçage.

Selon un autre aspect de la présente invention, il est proposé un procédé chirurgical dentaire pour le forage, à l'aide d'un ensemble tel que décrit précédemment, d'au moins deux trous pour des implants dans la mâchoire d'un patient en coopération avec un guide chirurgical de perçage comprenant un premier canon tubulaire de perçage à premier diamètre intérieur et un deuxième canon tubulaire de perçage à deuxième diamètre intérieur, le deuxième diamètre intérieur étant supérieur au premier diamètre intérieur, ledit procédé comprenant :
- une étape lors de laquelle le chirurgien fore un premier trou en engageant ledit foret selon son tronçon intermédiaire de guidage à faible jeu dans le premier canon tubulaire de perçage,
- une étape lors de laquelle le chirurgien munit le tronçon intermédiaire de guidage dudit foret d'une douille d'adaptation, et fore un deuxième trou en engageant la douille d'adaptation à faible jeu dans le deuxième canon tubulaire de perçage.

II doit être noté que le chirurgien peut forer les premier et deuxième trous dans n'importe quel ordre. Lors du forage du premier trou, le foret est directement engagé dans le premier canon tubulaire de perçage selon son tronçon intermédiaire de guidage. Lors du forage du deuxième trou, le foret est indirectement engagé dans le deuxième canon tubulaire de perçage selon son tronçon intermédiaire de guidage (par l'intermédiaire de la douille d'adaptation).

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective d'un ensemble selon l'invention comprenant un guide chirurgical de perçage, un foret et une douille d'adaptation ;
[Fig.2] La figure 2 est une vue en perspective de la douille d'adaptation de l'ensemble de la figure 1 ;
[Fig.3] La figure 3 est une vue en coupe de la douille d'adaptation de l'ensemble de la figure 1 ;
[Fig.4] La figure 4 est une vue en perspective de la douille d'adaptation et du foret de l'ensemble de la figure 1 après assemblage ;
[Fig.5] La figure 5 est une vue en coupe de l'assemblage de la figure 4 ;
[Fig.6] La figure 6 est une vue en perspective d'un jeu de forets comprenant notamment le foret de l'ensemble de la figure 1 ;
[Fig.7] La figure 7 est une vue en perspective du guide chirurgical de l'ensemble de la figure 1 disposé sur l'arcade dentaire d'un patient ;
[Fig.8] La figure 8 est une vue en coupe lors d'une première étape d'utilisation de l'ensemble de la figure 1 ;
[Fig.9] La figure 9 est une vue en coupe lors d'une deuxième étape d'utilisation de l'ensemble de la figure 1 ;
[Fig.10] La figure 10 est une vue en coupe lors d'une troisième étape d'utilisation de l'ensemble de la figure 1 ; et
[Fig.11] La figure 11 est une vue en coupe après la troisième étape d'utilisation de l'ensemble de la figure 1.

### DESCRIPTION DES MODES DE REALISATION PREFERES

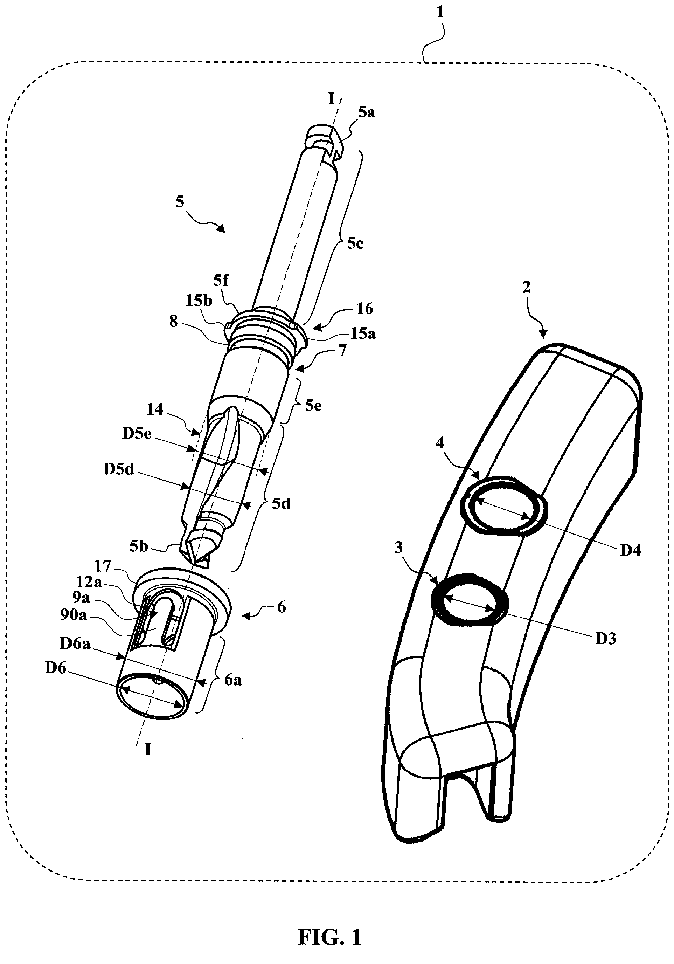

Les figures 1 à 11 permettent d'illustrer et comprendre la présente invention. Pour faciliter la compréhension du lecteur, le nombre de canons tubulaires de perçage et le nombre de forets est volontairement réduit.

Sur la figure 1 est illustré un mode de réalisation particulier d'ensemble 1 selon la présente invention.

Ledit ensemble 1 est prévu pour le forage d'un trou pour un implant dans la mâchoire d'un patient en coopération avec un guide chirurgical de perçage 2.

Le guide chirurgical de perçage 2 comprend :
- un premier canon tubulaire de perçage 3 à premier diamètre intérieur D3, et
- un deuxième canon tubulaire de perçage 4 à deuxième diamètre intérieur D4. Le deuxième diamètre intérieur D4 est supérieur au premier diamètre intérieur D3.

L'ensemble 1 comprend en outre au moins un foret 5 s'allongeant selon une direction longitudinale I-I entre une extrémité proximale 5a et une extrémité distale 5b libre. Le foret 5 comporte également un tronçon proximal de connexion 5c pour sa connexion à une pièce à main dentaire, et comporte un tronçon distal de coupe 5d.

Le foret 5 comporte, entre ses tronçons proximal de connexion 5c et distal de coupe 5d, un tronçon intermédiaire de guidage 5e cylindrique apte à s'engager à faible jeu selon son diamètre extérieur D5e dans le premier canon tubulaire de perçage 3.

Un engagement « à faible jeu » (radial) signifie que le diamètre extérieur D5e est légèrement inférieur au diamètre intérieur D3 du premier canon tubulaire de perçage 3 selon un jeu fonctionnel suffisamment grand pour permettre l'introduction du tronçon intermédiaire de guidage 5e par simple translation sans que cela nécessite d'effort particulier, et suffisamment faible pour garantir une coaxialité satisfaisante du tronçon intermédiaire de guidage 5e et du premier canon tubulaire de perçage 3. Par exemple, pour un diamètre intérieur D3 de 3,70 mm, on peut prévoir un diamètre D5e de 3,69 mm.

L'ensemble 1 comporte également une douille d'adaptation 6 apte à s'engager à faible jeu selon son diamètre extérieur D6a d'un tronçon d'engagement 6a (cylindrique) dans le deuxième canon tubulaire de perçage 4.

Un engagement « à faible jeu » (radial) signifie que le diamètre extérieur D6a est légèrement inférieur au diamètre intérieur D4 du deuxième canon tubulaire de perçage 4 selon un jeu fonctionnel suffisamment grand pour permettre l'introduction du tronçon d'engagement 6a par simple translation sans que cela nécessite d'effort particulier, et suffisamment faible pour garantir une coaxialité satisfaisante du tronçon d'engagement 6a et du deuxième canon tubulaire de perçage 4. Par exemple, pour un diamètre intérieur D4 de 4,20 mm, on peut prévoir un diamètre D6a de 4,19 mm.

Le tronçon distal de coupe 5d du foret 5 présente un diamètre extérieur D5d qui est inférieur ou égal au premier diamètre intérieur D3 de façon à pouvoir pénétrer dans le premier canon tubulaire de perçage 3.

La douille d'adaptation 6 comporte un diamètre intérieur D6 apte à recevoir à faible jeu le tronçon intermédiaire de guidage 5e du foret 5.

Un engagement « à faible jeu » (radial) signifie que le diamètre extérieur D5e est légèrement inférieur au diamètre intérieur D6 de la douille d'adaptation 6 selon un jeu fonctionnel suffisamment grand pour permettre l'introduction du tronçon intermédiaire de guidage 5e par simple translation sans que cela nécessite d'effort particulier, et suffisamment faible pour garantir une coaxialité satisfaisante du tronçon intermédiaire de guidage 5e et de la douille d'adaptation 6. Dans le présent exemple, le diamètre intérieur D6 est de 3,70 mm pour un diamètre D5e de 3,69 mm.

Des moyens de retenue axiale 7 permettent d'immobiliser la douille d'adaptation 6 cylindrique sur le foret 5 selon la direction longitudinale I-I.

Dans le mode de réalisation illustré, ces moyens de retenue axiale 7 comportent plus particulièrement :
- un logement creux 8 ménagé dans la paroi latérale du tronçon intermédiaire de guidage 5e du foret 5,
- deux pattes de verrouillage 9a et 9b, solidaires de la douille d'adaptation 6.

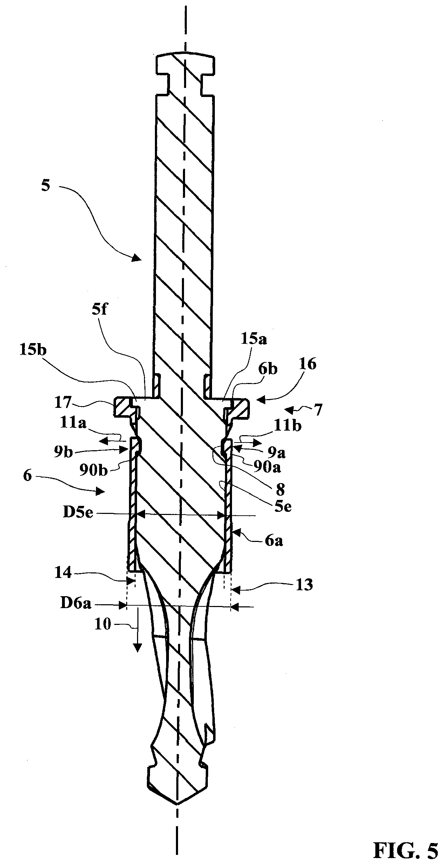

Comme il est plus particulièrement visible sur la figure 5, les pattes de verrouillage 9a et 9b sont déplaçables élastiquement entre une position de retenue (figure 5), dans laquelle les pattes de verrouillage 9a et 9b sont engagées au moins en partie dans le logement creux 8, et une position de libération (non illustrée) dans laquelle les pattes de verrouillage 9a et 9b sont hors du logement creux 8 de façon à autoriser un coulissement longitudinal de la douille d'adaptation 6 sur le tronçon intermédiaire de guidage 5e du foret 5. Pour déplacer les pattes de verrouillage 9a et 9b vers leur position de libération, on déplace la douille d'adaptation 6 en direction de l'extrémité distale 5b du foret 5 par un mouvement illustré par la flèche 10. Les pattes de verrouillage 9a et 9b se déforment alors selon les mouvements illustrés par les flèches 11a et 11b, et échappent au logement creux 8, ce qui permet ensuite de coulisser la douille d'adaptation 6 en direction de l'extrémité distale 5b jusqu'à la retirer du foret 5.

De façon plus spécifique, le logement creux 8 est une gorge annulaire périphérique.

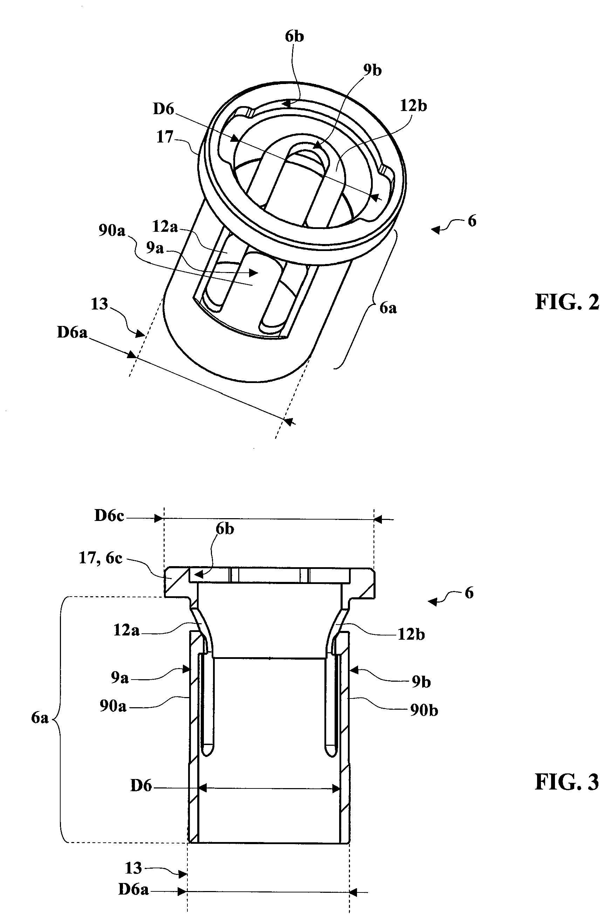

Les pattes de verrouillage 9a et 9b sont disposées dans des lumières respectives 12a et 12b ménagées dans la paroi latérale de la douille d'adaptation 6 (figure 2).

On voit plus particulièrement sur la figure 5 que :
- en position de verrouillage, les pattes de verrouillage 9a et 9b ne dépassent pas au-delà d'une enveloppe extérieure cylindrique 13 définie par le diamètre extérieur D6a du tronçon d'engagement 6a de la douille d'adaptation 6,
- en position de verrouillage, les pattes de verrouillage 9a et 9b dépassent à l'intérieur d'une enveloppe intérieure cylindrique 14 de diamètre sensiblement égal au diamètre extérieur D5e du tronçon intermédiaire de guidage 5e.

Les pattes de verrouillage 9a et 9b comportent des faces extérieures respectives 90a et 90b qui, en position de retenue, se trouvent sensiblement dans le prolongement de la surface cylindrique extérieure à section circulaire du tronçon d'engagement 6a de la douille d'adaptation 6.

On voit plus particulièrement sur la figure 1 que le foret 5 comporte, après le tronçon intermédiaire de guidage 5e et en direction de l'extrémité proximale 5a, un tronçon de butée 5f à section transversale non circulaire dont la plus grande dimension radiale est supérieure au diamètre D5e. Ici, la section transversale non circulaire est procurée par des épanouissements radiaux 15a et 15b diamétralement opposés.

Le tronçon de butée 5f participe à l'immobilisation axiale de la douille d'adaptation 6 en formant une butée contre laquelle vient porter en appui la douille d'adaptation 6, et peut en ce sens être considéré comme faisant partie des moyens de retenue axiale 7. Par ailleurs, le tronçon de butée 5f est destiné à venir porter en appui contre la face d'ouverture supérieure du premier canon tubulaire de perçage 3 pour stopper l'enfoncement du foret 5 à travers le premier canon tubulaire de perçage 3.

Le tronçon 5f fait également partie de moyens d'indexation en rotation 16 permettant d'immobiliser la douille d'adaptation 6 sur le foret 5 autour de la direction longitudinale I-I.

En effet, le tronçon de butée 5f constitue un tronçon mâle à section transversale non circulaire sur le foret 5. De son côté, la douille d'adaptation 6 comporte un tronçon femelle 6b à section transversale (visible sur la figure 2) qui est sensiblement complémentaire à celle du tronçon 5f.

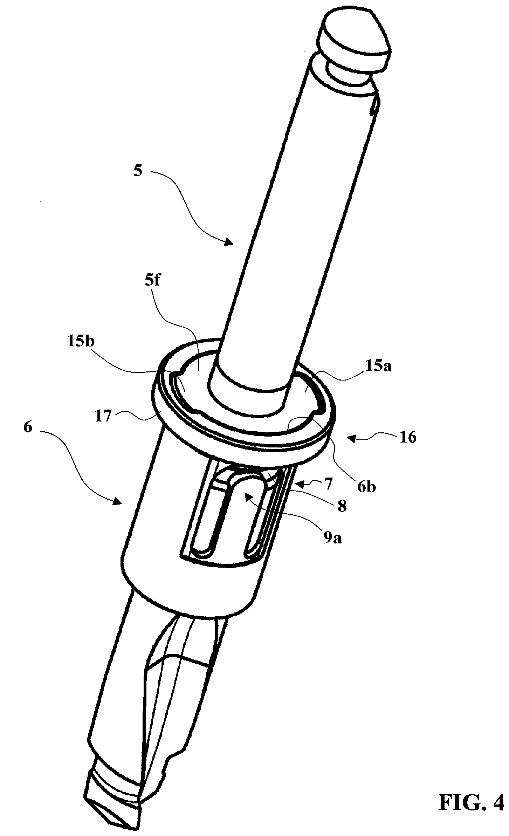

Le tronçon mâle 5f est ainsi apte à être reçu dans le tronçon femelle 6b par simple coulissement de la douille d'adaptation 6 sur le tronçon intermédiaire de guidage 5e du foret 5 (figure 4). Lorsque le tronçon mâle 5f est reçu dans le tronçon femelle 6b, les tronçons 5f et 6b coopèrent pour immobiliser en rotation la douille d'adaptation 6 sur le foret 5 autour de la direction longitudinale I-I. Simultanément, les pattes de verrouillage 9a et 9b immobilisent la douille d'adaptation 6 axialement sur le foret 5 et maintiennent donc engagés les tronçons 5f et 6b.

Sur les figures 2 et 3, on voit que la douille d'adaptation 6 comporte un épanouissement radial 17 présentant, selon au moins une direction radiale, un rayon supérieur au rayon du deuxième diamètre intérieur D4. Cet épanouissement radial 17 est annulaire périphérique, et est ainsi constitué en pratique par un tronçon proximal 6c présentant un diamètre extérieur D6c supérieur au deuxième diamètre intérieur D4. L'épanouissement radial 17 procure une butée destinée à venir porter en appui contre la face d'ouverture supérieure du deuxième canon tubulaire de perçage 4 pour stopper, par coopération avec les moyens de retenue axiale 7, l'enfoncement du foret 5 à travers le deuxième canon tubulaire de perçage 4.

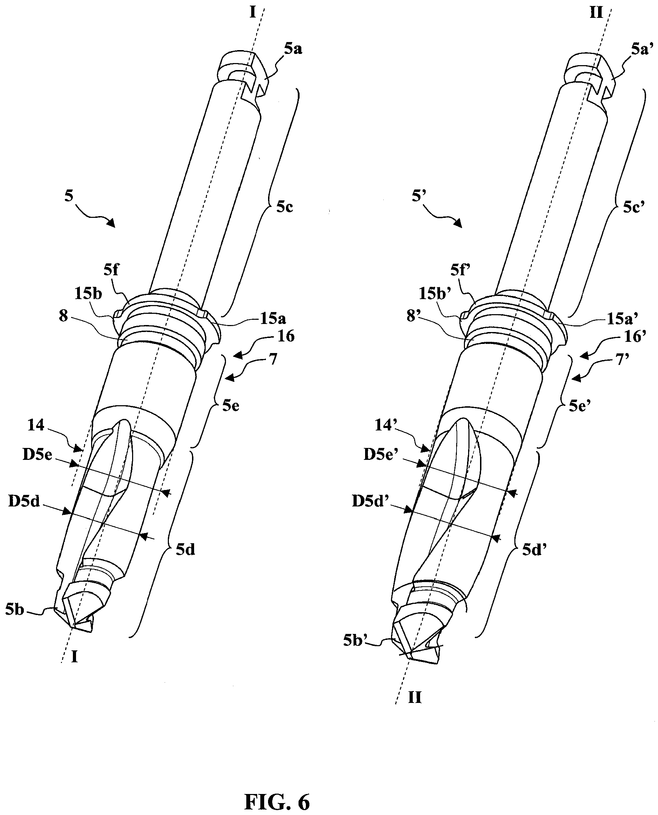

L'utilisation et les avantages de la présente invention ressortiront mieux de l'explication suivante, effectuée en lien avec les figures 6 à 11.

Sur la figure 6 sont illustrés un foret 5 tel qu'illustré sur la figure 1, ainsi qu'un foret 5', faisant tous deux partie d'un ensemble 1.

Le foret 5' est similaire au foret 5 et s'allonge selon une direction longitudinale II-II, avec une extrémité proximale 5a', une extrémité distale 5b', un tronçon proximal de connexion 5c', un tronçon distal de coupe 5d', un tronçon intermédiaire de guidage 5e' et un tronçon de butée 5f'. De façon générale, tous les éléments relatifs au foret 5 référencés numériquement se retrouvent de façon similaire dans le foret 5' avec un « ' ».

Les tronçons intermédiaires de guidage 5e et 5e' ont des diamètres D5e et D5e' qui sont égaux leur permettant de s'engager à faible jeu dans le premier canon tubulaire de perçage 3 de diamètre D3.

Les longueurs des tronçons distaux de coupe 5d et 5d' sont ici choisies égales, pour ne pas compliquer inutilement le cas.

La seule différence entre les forets 5 et 5' est que le tronçon de coupe 5d' présente un diamètre D5d' (3,6 mm par exemple) qui est supérieur au diamètre D5d (3 mm par exemple).

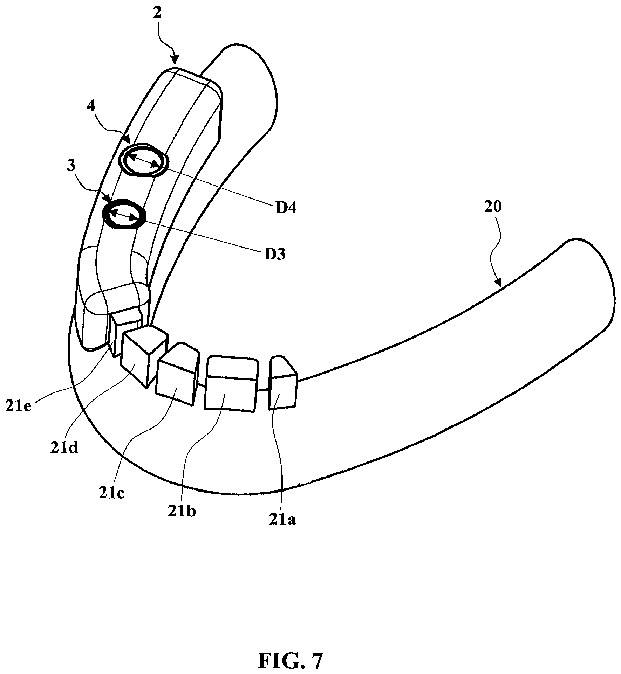

Les forets 5 et 5' sont destinés à être utilisés en coopération avec le guide chirurgical de perçage 2 illustré sur la figure 7, positionné sur la mâchoire 20 du patient dont les dents 21a à 21e restantes sont illustrées de façon schématique.

Le guide chirurgical de perçage 2 comporte un premier canon tubulaire de perçage 3 et un deuxième canon tubulaire de perçage 4 pour ménager des premier 18 et deuxième 19 trous destinés à l'implantation de deux implants. Dans le présent exemple, lesdits implants ont des longueurs identiques, pour ne pas compliquer inutilement la compréhension du lecteur. Un premier implant de 3,4 mm de diamètre est destiné à être implanté dans un premier trou 18 de 3 mm de diamètre qui sera foré en correspondance du premier canon tubulaire de perçage 3, tandis qu'un deuxième implant de 4 mm de diamètre est destiné à être implanté dans un deuxième trou 19 de 3,6 mm de diamètre qui sera foré en correspondance du deuxième canon tubulaire de perçage 4. Les diamètres des premier 18 et deuxième 19 trous sont ici choisis en fonction de la qualité osseuse du patient.

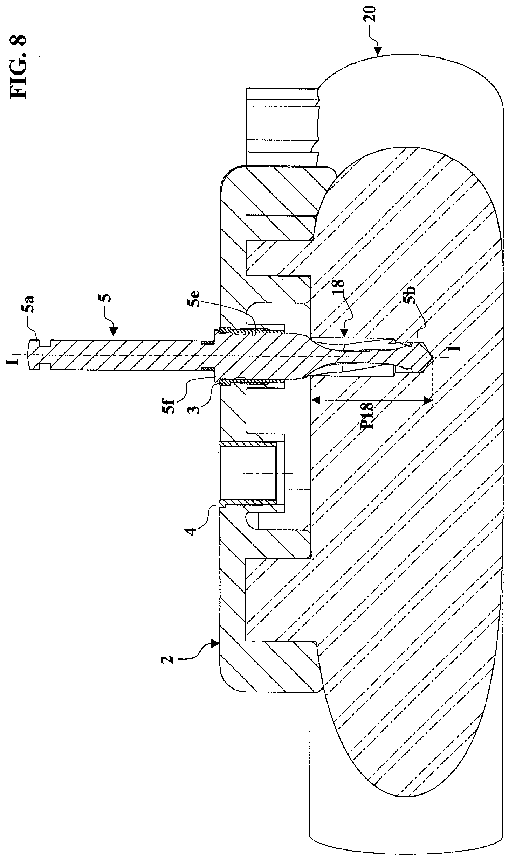

Sur la figure 8 est illustrée une étape du forage du premier trou 18. Pour ce faire, le chirurgien engage et enfonce le foret 5 dans le premier canon tubulaire de perçage 3. Le tronçon intermédiaire de guidage 5e (diamètre extérieur D5e = 3,69 mm) vient directement et à faible jeu dans le premier canon tubulaire de perçage 3 (diamètre intérieur D3 = 3,70 mm). Le chirurgien poursuit son geste d'enfoncement jusqu'à ce que le tronçon de butée 5f vienne en butée contre le premier canon tubulaire de perçage 3, ce qui permet d'obtenir un premier trou 18 de profondeur P18 et de diamètre (3 mm) prédéterminés et adaptés pour la réception du premier implant. Il est à noter que des forets à tronçon distal de coupe de plus faible(s) diamètre et/ou longueur que le foret 5 ont pu être utilisés préalablement au foret 5. L'utilisation de ceux-ci n'est toutefois pas illustrée pour simplifier la compréhension du lecteur.

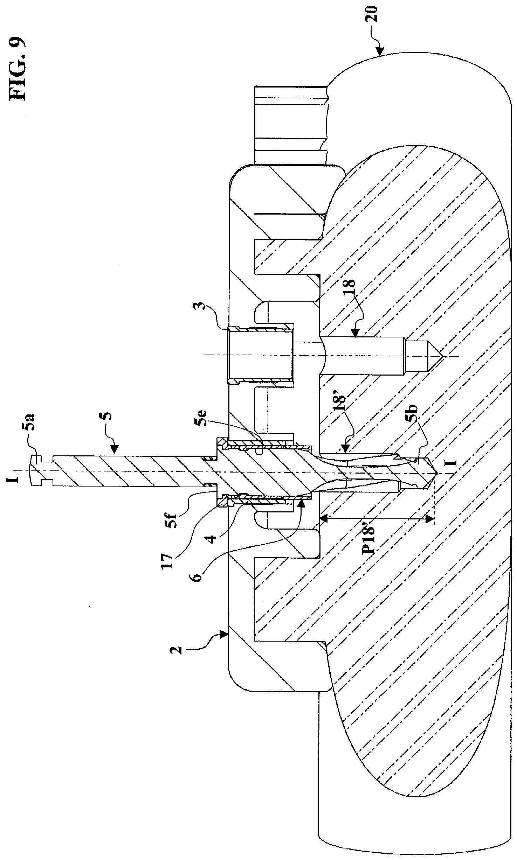

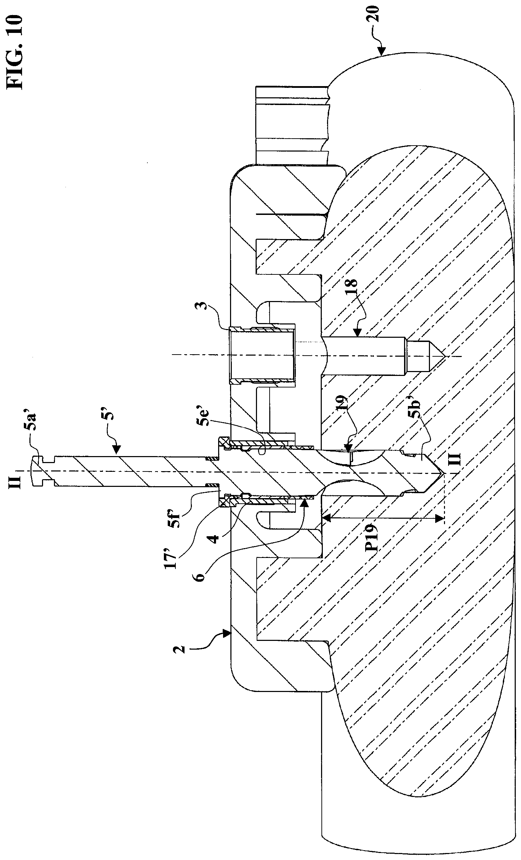

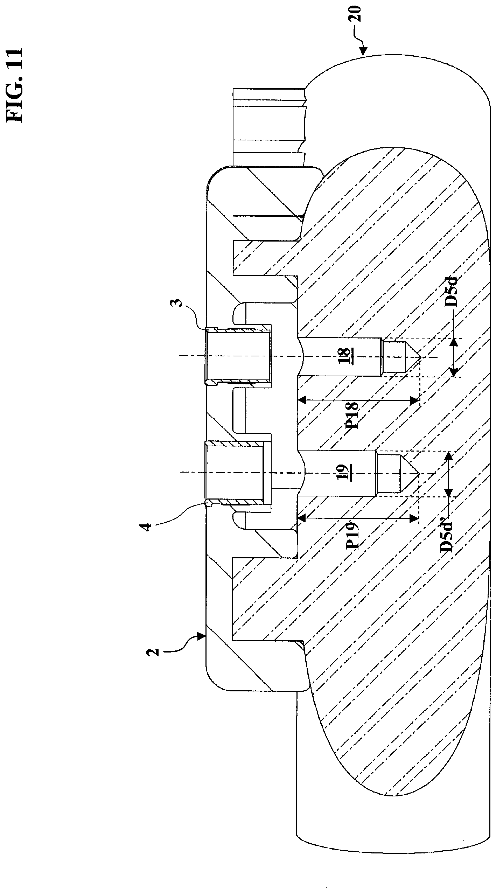

Sur la figure 9 est illustrée une étape du forage du deuxième trou 19 visible sur les figures 10 et 11. Pour ce faire, le chirurgien engage et enfonce le foret 5 dans le deuxième canon tubulaire de perçage 4. Le foret 5 est préalablement muni de la douille d'adaptation 6, comme illustré sur les figures 4 et 5. Le tronçon intermédiaire de guidage 5e vient indirectement (par l'intermédiaire de la douille d'adaptation 6 à tronçon d'engagement 6a de diamètre extérieur D6a = 4,19 mm et de diamètre intérieur D6 = 3,70 mm) et à faible jeu dans le deuxième canon tubulaire de perçage 4 (diamètre intérieur D4 = 4,20 mm). Le chirurgien poursuit son geste d'enfoncement jusqu'à ce que le tronçon proximal 6c (épanouissement radial 17) vienne en butée contre le deuxième canon tubulaire de perçage 4, ce qui permet d'obtenir un pré-trou 18' de profondeur P18' et de 3 mm de diamètre. Il est à noter que des forets à tronçon distal de coupe de plus faible(s) diamètre et/ou longueur que le foret 5 ont pu être utilisés préalablement au foret 5. L'utilisation de ceux-ci n'est toutefois pas illustrée, pour simplifier la compréhension du lecteur.

Après la réalisation du pré-trou 18', le chirurgien finalise le perçage pour obtenir le deuxième trou 19 à l'aide du foret 5' comme illustré sur la figure 10. Pour ce faire, le chirurgien engage et enfonce le foret 5' dans le deuxième canon tubulaire de perçage 4. Le foret 5' est préalablement muni de la douille d'adaptation 6. Le tronçon intermédiaire de guidage 5e' vient indirectement (par l'intermédiaire de la douille d'adaptation 6) et à faible jeu dans le deuxième canon tubulaire de perçage 4. Le chirurgien poursuit son geste d'enfoncement jusqu'à ce que le tronçon proximal 6c (épanouissement radial 17) vienne en butée contre le deuxième canon tubulaire de perçage 4, ce qui permet d'obtenir un deuxième trou 19 de profondeur P19 et de diamètre (3,6 mm) prédéterminés et adaptés pour la réception du deuxième implant.

Les premier 18 et deuxième 19 trous ainsi obtenus sont plus particulièrement visibles sur la figure 11.

Lors de la réalisation du deuxième trou 19, la douille d'adaptation 6 permet d'utiliser successivement les deux forets 5 et 5' dont les mêmes tronçons intermédiaire de guidage 5e et 5e' sont adaptés à un guidage à faible jeu dans le premier canon tubulaire de perçage 3 mais inadaptés pour un guidage à faible jeu dans le deuxième canon tubulaire de perçage 4. Plutôt que de fournir au chirurgien deux forets similaires à tronçons intermédiaire de guidage adaptés à un guidage à faible jeu dans le deuxième canon tubulaire de perçage 4, on fournit au chirurgien la douille d'adaptation 6 pour lui permettre de réutiliser les deux forets 5 et 5', d'où une économie dans le procédé.

L'invention concerne ainsi également un procédé chirurgical dentaire pour le forage, à l'aide d'un ensemble 1, d'au moins deux trous 18 et 19 pour des implants dans la mâchoire 20 d'un patient en coopération avec un guide chirurgical de perçage 2 comprenant un premier canon tubulaire de perçage 3 à premier diamètre intérieur D3 et un deuxième canon tubulaire de perçage 4 à deuxième diamètre intérieur D4, le deuxième diamètre intérieur D4 étant supérieur au premier diamètre intérieur D3. Ledit procédé comprend :
- une étape lors de laquelle le chirurgien fore un premier trou 18 en engageant ledit foret 5 selon son tronçon intermédiaire de guidage 5e à faible jeu dans le premier canon tubulaire de perçage 3,
- une étape lors de laquelle le chirurgien munit le tronçon intermédiaire de guidage 5e dudit foret 5 d'une douille d'adaptation 6, et fore un deuxième trou 19 en engageant la douille d'adaptation 6 à faible jeu dans le deuxième canon tubulaire de perçage 4.

Dans le cas illustrés sur les figures, par souci de simplicité, il n'a été effectué qu'une variation de diamètre entre les premier et deuxième implants. Il faut également prendre en compte les variations de longueurs d'implants qui peuvent se présenter. En outre, il peut y avoir plus de deux canons tubulaires de perçage avec des diamètres intérieurs respectifs différents (par exemple trois). On peut alors prévoir trois douilles d'adaptation différentes, à savoir :
- une première douille d'adaptation permettant de réutiliser dans le canon tubulaire de perçage de diamètre intérieur intermédiaire les forets adaptés à un guidage à faible jeu dans le canon tubulaire de perçage de plus petit diamètre,
- une deuxième douille d'adaptation permettant de réutiliser dans le canon tubulaire de perçage de plus grand diamètre les forets adaptés à un guidage à faible jeu dans le canon tubulaire de perçage de plus petit diamètre,
- une troisième douille d'adaptation permettant de réutiliser dans le canon tubulaire de perçage de plus grand diamètre les forets adaptés à un guidage à faible jeu dans le canon tubulaire de perçage de diamètre intérieur intermédiaire.

L'économie en nombre de forets est alors encore plus importante.

Naturellement, cette économie vaut également pour tous les outils autres que des forets, tels que par exemple les forets pointeurs et les tarauds.

## Revendications

1. 1 - Ensemble (1) pour le forage de trous (18, 19) pour des implants dans la mâchoire (20) d'un patient en coopération avec un guide chirurgical de perçage (2), ledit ensemble (1) comportant :
- un guide chirurgical de perçage (2) comprenant un premier canon tubulaire de perçage (3) à premier diamètre intérieur (D3) et un deuxième canon tubulaire de perçage (4) à deuxième diamètre intérieur (D4),
- un foret (5) s'allongeant selon une direction longitudinale (I-I) entre une extrémité proximale (5a) et une extrémité distale (5b) libre, avec un tronçon proximal de connexion (5c) à une pièce à main dentaire et un tronçon distal de coupe (5d) qui présente un diamètre extérieur (D5d) inférieur ou égal au premier diamètre intérieur (D3), ledit foret (5) comportant, entre ses tronçons proximal de connexion (5c) et distal de coupe (5d), un tronçon intermédiaire de guidage (5e) cylindrique,
- une douille d'adaptation (6) comportant un diamètre intérieur (D6) apte à recevoir à faible jeu le tronçon intermédiaire de guidage (5e) du foret (5), **caractérisé en ce que** :
- le deuxième diamètre intérieur (D4) est supérieur au premier diamètre intérieur (D3),
- le tronçon intermédiaire de guidage (5e) cylindrique est apte à s'engager à faible jeu selon son diamètre extérieur (D5e) dans le premier canon tubulaire de perçage (3),
- la douille d'adaptation (6) est apte à s'engager à faible jeu selon un diamètre extérieur (D6a) d'un tronçon d'engagement (6a) dans le deuxième canon tubulaire de perçage (4).

2. 2 - Ensemble (1) selon la revendication 1, **caractérisé en ce que** des moyens de retenue axiale (7) permettent d'immobiliser la douille d'adaptation (6) sur le foret (5) en une position prédéterminée selon la direction longitudinale (I-I).

3. 3 - Ensemble (1) selon la revendication 2, **caractérisé en ce que** les moyens de retenue axiale (7) comportent :
- un logement creux (8) ménagé dans la paroi latérale du tronçon intermédiaire de guidage (5e) du foret (5),
- une patte de verrouillage (9a, 9b), solidaire de la douille d'adaptation (6), déplaçable élastiquement entre une position de retenue, dans laquelle la patte de verrouillage (9a, 9b) est engagée au moins en partie dans le logement creux (8), et une position de libération dans laquelle la patte de verrouillage (9a, 9b) est hors du logement creux (8) de façon à permettre un coulissement longitudinal de la douille d'adaptation (6) sur le tronçon intermédiaire de guidage (5e) du foret (5).

4. 4 - Ensemble (1) selon la revendication 3, **caractérisé en ce que** le logement creux (8) est une gorge annulaire périphérique.

5. 5 - Ensemble (1) selon l'une des revendications 3 ou 4, **caractérisé en ce que** la patte de verrouillage (9a, 9b) est disposée dans une lumière (12a, 12b) ménagée dans la paroi latérale de la douille d'adaptation (6).

6. 6 - Ensemble (1) selon la revendication 5, **caractérisé en ce que** :
- en position de verrouillage, la patte de verrouillage (9a, 9b) ne dépasse pas au-delà d'une enveloppe extérieure cylindrique (13) définie par le diamètre extérieur (D6a) du tronçon d'engagement (6a) de la douille d'adaptation (6),
- en position de verrouillage, la patte de verrouillage (9a, 9b) dépasse à l'intérieur d'une enveloppe intérieure cylindrique (14) de diamètre sensiblement égal au diamètre extérieur (D5e) du tronçon intermédiaire de guidage (5e).

7. 7 - Ensemble (1) selon l'une quelconque des revendications 1 à 6, **caractérisé en ce que** le tronçon intermédiaire de guidage (5e) est prolongé, en direction de l'extrémité proximale (5a) du foret (5), par un tronçon de butée (5f) à section transversale dont la plus grande dimension radiale est supérieure au diamètre extérieur (D5e) du tronçon intermédiaire de guidage (5e), ledit tronçon de butée (5f) ayant de préférence une section transversale non circulaire.

8. 8 - Ensemble (1) selon l'une quelconque des revendications 1 à 7, **caractérisé en ce qu'**il comprend des moyens d'indexation en rotation (16) permettant d'immobiliser la douille d'adaptation (6) sur le foret (5) autour de la direction longitudinale (I-I).

9. 9 - Ensemble (1) selon la revendication 8, **caractérisé en ce que** les moyens d'indexation en rotation (16) comportent :
- un tronçon mâle (5f) à section transversale non circulaire sur l'un du foret (5) et de la douille d'adaptation (6),
- un tronçon femelle (6b) à section transversale sensiblement complémentaire sur l'autre du foret (5) et de la douille d'adaptation (6),
- le tronçon mâle (5f) est apte à être reçu dans le tronçon femelle (6b) par simple coulissement de la douille d'adaptation (6) sur le tronçon intermédiaire de guidage (5e) du foret (5).

10. 10 - Ensemble (1) selon l'une quelconque des revendications 1 à 9, **caractérisé en ce que** la douille d'adaptation (6) comporte un épanouissement radial (17) présentant, selon au moins une direction radiale, un rayon supérieur au rayon du deuxième diamètre intérieur (D4).

11. 11 - Ensemble (1) selon la revendication 10, **caractérisé en ce que** l'épanouissement radial (17) est annulaire périphérique.

## Patentansprüche

1. Anordnung (1) zum Bohren von Löchern (18, 19) für Implantate in dem Kiefer (20) eines Patienten im Zusammenwirken mit einer chirurgischen Bohrführung (2), wobei besagte Anordnung (1) aufweist:
- eine chirurgische Bohrführung (2), umfassend eine erste röhrenförmige Bohrbuchse (3) mit einem ersten Innendurchmesser (D3) und eine zweite röhrenförmige Bohrbuchse (4) mit einem zweiten Innendurchmesser (D4),
- einen Bohrer (5), der sich in einer Längsrichtung (I-I) zwischen einem proximalen Ende (5a) und einem freien distalen Ende (5b) erstreckt, mit einem proximalen Verbindungsabschnitt (5c) zu einem zahnärztlichen Handstück und einem abgeschnittenen distalen Abschnitt (5d), wobei der Außendurchmesser (D5d) kleiner oder gleich dem ersten Innendurchmesser (D3) ist, wobei besagter Bohrer (5) zwischen seinem proximalen Verbindungsabschnitt (5c) und seinem abgeschnittenen distalen Abschnitt (5d) einen zylindrischen Führungszwischenabschnitt (5e) aufweist,
- eine Adapterhülse (6), die einen Innendurchmesser (D6) aufweist, der in der Lage ist, mit geringem Spiel den Führungszwischenabschnitt (5e) des Bohrers (5) aufzunehmen,
**dadurch gekennzeichnet, dass:**
- der zweite Innendurchmesser (D4) größer ist als der erste Innendurchmesser (D3),
- der zylindrische Führungszwischenabschnitt (5e) in der Lage ist, mit geringem Spiel mit seinem Außendurchmesser (De5) in Eingriff in der ersten röhrenförmigen Bohrbuchse (3) zu gelangen,
- die Adapterhülse (6) in der Lage ist, mit geringem Spiel mit einem Außendurchmesser (D6a) eines Eingriffsabschnitts (6a) in Eingriff in der zweiten röhrenförmigen Bohrbuchse (4) zu gelangen.

2. Anordnung (1) nach Anspruch 1, **dadurch gekennzeichnet, dass** axiale Haltemittel (7) es ermöglichen, die Adapterhülse (6) auf dem Bohrer (5) in einer vorbestimmten Position in Längsrichtung (I-I) festzusetzen.

3. Anordnung (1) nach Anspruch 2, **dadurch gekennzeichnet, dass** die axialen Haltemittel (7) aufweisen:
- eine Lagermulde (8), die in der lateralen Wand des Führungszwischenabschnitts (5e) des Bohrers (5) ausgebildet ist,
- eine mit der Adapterhülse (6) fest verbundene Rastnase (9a, 9b), die elastisch bewegbar ist zwischen einer Halteposition, in der die Rastnase (9a, 9b) zumindest teilweise in die Lagermulde (8) in Eingriff ist, und einer Freigabeposition, in der sich die Rastnase (9a, 9b) außerhalb der Lagermulde (8) befindet, um ein Längsgleiten der Adapterhülse (6) auf dem Führungszwischenabschnitt (5e) des Bohrers (5) zu ermöglichen.

4. Anordnung (1) nach Anspruch 3, **dadurch gekennzeichnet, dass** die Lagermulde (8) eine periphere Ringnut ist.

5. Anordnung (1) nach einem der Ansprüche 3 oder 4, **dadurch gekennzeichnet, dass** die Rastnase (9a, 9b) in einem Schlitz (12a, 12b) angeordnet ist, der in der lateralen Wand der Adapterhülse (6) ausgebildet ist.

6. Anordnung (1) nach Anspruch 5, **dadurch gekennzeichnet, dass**:
- in der Rastposition die Rastnase (9a, 9b) einen durch den Außendurchmesser (D6a) des Eingriffsabschnitts (6a) der Adapterhülse (6) definierten zylindrischen Außenmantel (13) nicht überragt,
- in der Rastposition die Rastnase (9a, 9b) das Innere eines zylindrischen Innenmantels (14) mit einem Durchmesser im Wesentlichen gleich dem Außendurchmesser (D5e) des Führungszwischenabschnitts (5e) überragt.

7. Anordnung (1) nach einem der Ansprüche 1 bis 6, **dadurch gekennzeichnet, dass** der Führungszwischenabschnitt (5e) in Richtung des proximalen Endes (5a) des Bohrers (5) durch einen Anlageabschnitt (5f) mit einem Querschnitt verlängert ist, dessen größte radiale Abmessung größer ist als der Außendurchmesser (D5e) des Führungszwischenabschnitts (5e), wobei besagter Anlageabschnitt (5f) vorzugsweise einen nicht kreisförmigen Querschnitt hat.

8. Anordnung (1) nach einem der Ansprüche 1 bis 7, **dadurch gekennzeichnet, dass** sie Rotationsindexierung (16) umfasst, die es ermöglichen, die Adapterhülse (6) auf dem Bohrer (5) um die Längsrichtung (I-I) zu immobilisieren.

9. Anordnung (1) nach Anspruch 8, **dadurch gekennzeichnet, dass** die Rotationsindexierung(16) aufweisen:
- einen männlichen Abschnitt (5f) mit einem nicht kreisförmigen Querschnitt an einem der Bohrer (5) und der Adapterhülse (6),
- einen weiblichen Abschnitt (6b) mit einem im Wesentlichen komplementären Querschnitt auf der anderen Seite von Bohrer (5) und Adapterhülse (6),
- der männliche Abschnitt (5f) in der Lage ist, um in dem weiblichen Abschnitt (6b) durch einfaches Aufschieben der Adapterhülse (6) auf dem Führungszwischenabschnitt (5e) des Bohrers (5) aufgenommen zu werden.

10. Anordnung (1) nach einem der Ansprüche 1 bis 9, **dadurch gekennzeichnet, dass** die Adapterhülse (6) eine radiale Aufweitung (17) aufweist, die in mindestens einer radialen Richtung einen Radius hat, der größer ist als der Radius des zweiten Innendurchmessers (D4).

11. Anordnung (1) nach Anspruch 10, **dadurch gekennzeichnet, dass** die radiale Erweiterung (17) peripher ringförmig ist.

## Claims

1. Assembly (1) for boring holes (18, 19) for implants in the jaw (20) of a patient in collaboration with a surgical drilling guide (2), said assembly (1) comprising:
- a surgical drilling guide (2) comprising a first tubular drilling sleeve (3) with a first inside diameter (D3) and a second tubular drilling sleeve (4) with a second inside diameter (D4),
- a drill bit (5) extending in a longitudinal direction (I-I) between a proximal end (5a) and a free distal end (5b) with a proximal connection portion (5c) for connection to a dental handpiece and a distal cutting portion (5d) that has an outside diameter (D5d) less than or equal to the first inside diameter (D3), said drill bit (5) comprising, between its proximal connection portion (5c) and distal cutting portion (5d), an intermediate cylindrical guide portion (5e),
- an adapter bushing (6) having an inside diameter (D6) able to accept, with a small amount of clearance, the intermediate guide portion (5e) of the drill bit (5),
**characterized in that**:
- the second inside diameter (D4) is greater than the first inside diameter (D3),
- the intermediate cylindrical guide portion (5e) is able to fit with a small amount of clearance on its outside diameter (D5e) into the first tubular drilling sleeve (3),
- the adapter bushing (6) is able to fit with a small amount of clearance on an outside diameter (D6a) of an engagement portion (6a) into the second tubular drilling sleeve (4).

2. Assembly (1) according to Claim 1, **characterized in that** axial retention means (7) allow the adapter bushing (6) to be immobilized on the drill bit (5) at a predetermined position in the longitudinal direction (I-I) .

3. Assembly (1) according to Claim 2, **characterized in that** the axial retention means (7) comprise:
- a hollow housing (8) formed in the lateral wall of the intermediate guide portion (5e) of the drill bit (5),
- a locking tab (9a, 9b) integral with the adapter bushing (6) and able to be moved elastically between a retaining position in which the locking tab (9a, 9b) is at least partially engaged in the hollow housing (8), and a release position in which the locking tab (9a, 9b) is out of the hollow housing (8) so as to allow the adapter bushing (6) to slide longitudinally on the intermediate guide portion (5e) of the drill bit (5) .

4. Assembly (1) according to Claim 3, **characterized in that** the hollow housing (8) is a peripheral annular groove.

5. Assembly (1) according to one of Claims 3 or 4, **characterized in that** the locking tab (9a, 9b) is positioned in an aperture (12a, 12b) formed in the lateral wall of the adapter bushing (6).

6. Assembly (1) according to Claim 5, **characterized in that**:
- in the locking position, the locking tab (9a, 9b) does not extend beyond a cylindrical exterior envelope (13) defined by the outside diameter (D6a) of the engagement portion (6a) of the adapter bushing (6),
- in the locking position, the locking tab (9a, 9b) protrudes into a cylindrical interior envelope (14) of a diameter substantially equal to the outside diameter (D5e) of the intermediate guide portion (5e).

7. Assembly (1) according to any one of Claims 1 to 6, **characterized in that** the intermediate guide portion (5e) is extended, in the direction of the proximal end (5a) of the drill bit (5), by an abutment portion (5f) with a cross section of which the largest radial dimension is greater than the outside diameter (D5e) of the intermediate guide portion (5e), said abutment portion (5f) preferably having a non-circular cross section.

8. Assembly (1) according to any one of Claims 1 to 7, **characterized in that** it comprises rotation-indexing means (16) allowing the adapter bushing (6) to be immobilized on the drill bit (5) about the longitudinal direction (I-I).

9. Assembly (1) according to Claim 8, **characterized in that** the rotation-indexing means (16) comprise:
- a male portion (5f) with a non-circular cross section on one of either the drill bit (5) or the adapter bushing (6),
- a female portion (6b) with a substantially complementing cross section on the other of either the drill bit (5) or the adapter bushing (6),
- the male portion (5f) is able to be accepted in the female portion (6b) simply by the sliding of the adapter bushing (6) on the intermediate guide portion (5e) of the drill bit (5).

10. Assembly (1) according to any one of Claims 1 to 9, **characterized in that** the adapter bushing (6) comprises a radial widening (17) which, in at least one radial direction, has a radius greater than the radius of the second inside diameter (D4).

11. Assembly (1) according to Claim 10, **characterized in that** the radial widening (17) is peripherally annular.
